# EUROPÄISCHE PATENTSCHRIFT

(11) **EP 1 664 589 B1**
(45) Veröffentlichungstag und Bekanntmachung des Hinweises auf die Patenterteilung: **28.05.2008**
(21) Anmeldenummer: 04741418.0
(22) Anmeldetag: 17.08.2004
(51) Int. Cl.: F16H 3/72, B62D 5/04, B62D 5/00

(54) **FAHRZEUGLENKUNG MIT EINRICHTUNG ZUR ÄNDERUNG DES ÜBERSETZUNGSVERHÄLTNISSES**
VEHICLE STEERING SYSTEM COMPRISING A DEVICE FOR ALTERING THE TRANSMISSION RATIO
DIRECTION DE VEHICULE AVEC DISPOSITIF POUR MODIFIER LE RAPPORT DE TRANSMISSION

(30) Priorität: 16.09.2003 DE 10342681
(43) Veröffentlichungstag der Anmeldung: 07.06.2006
(73) Patentinhaber: ThyssenKrupp Automotive AG, 44793 Bochum (DE)
(72) Erfinder: ARBANAS, Viktor, CH-5400 Baden (CH)
(74) Vertreter: Adams, Steffen
(86) Internationale Anmeldenummer: PCT/EP2004/009198
(87) Internationale Veröffentlichungsnummer: WO 2005/036027

(56) Entgegenhaltungen:
- WO-A-99/30954
- DE-A- 10 159 704
- DE-A- 10 159 800
- DE-A- 19 723 358
- DE-A- 19 906 703
- DE-A- 19 908 357

## Beschreibung

Die Erfindung betrifft eine Fahrzeuglenkung mit einer Übersetzungsverhältnisänderungseinrichtung und einem elektrischen Hilfsantrieb nach dem Oberbegriff des Anspruchs 1.

Es sind eine Reihe von Fahrzeuglenkungen bekannt, bei denen die Funktion einer Drehzahlübersetzung und eines Hilfskraftantriebes in getrennten Einrichtungen realisiert sind.

So ist in der DE 19823721 A1 eine Drehzahlüberlagerung vorgestellt. Hier wird durch ein Steuerrad ein Gehäuse angetrieben, in dem sich Verzahnungen eines Hohlrades zweier Planetengetriebe befinden. Ein in dem Gehäuse angeordneter Elektromotor treibt das Sonnenrad des ersten Planetengetriebes an. Der Planetenträger des ersten Planetengetriebes treibt das Sonnenrad des zweiten Planetengetriebes an. Die Planeten des zweiten Planetengetriebes stützen sich am Hohlrad des Gehäuses ab und der Planetenträger ist mit der Ausgangswelle verbunden. In der gezeigten Ausführungsform ist der Antrieb des Sonnenrades des ersten Planetengetriebes direkt durch den Rotor des Elektromotors realisiert. Durch eine entsprechende Ansteuerung des Elektromotors können die gewünschten Drehzahlübersetzungen dargestellt werden. Diese im Stand der Technik gezeigte Lösung besitzt aber einige entscheidende Nachteile. Die gesamte Einheit wird mit der Drehung des Steuerrades mitgedreht. Der Fahrer muss also bei der Drehung des Steuerrades das gesamte treibende Drehmoment zur Verdrehung des Lenkritzels aufwenden und zusätzlich die Trägheit der gesamten Einheit überwinden. Das auszugleichen sind derartige Systeme mit einer zusätzlichen Hilfskraftunterstützung an anderer Stelle ausgestattet. Weiterhin ist jede derartige Getriebeeinheit mit Spielen behaftet. Das hat zur Folge, dass die Antriebs- und Abtriebswelle so gelagert sein müssen, dass die gesamte Einheit gehalten wird und eine Verbindung mit hoher Lagestabilität zwischen Steuerrad und Abtrieb erreicht wird. Das bedeutet einen nicht unerheblichen konstruktiven Aufwand. Ferner ist die Einkopplung der elektrischen Energie in den Elektromotor, der sich mit dem Steuerrad mitdreht, aufwendig.

In einem weiteren Stand der Technik, der DE 19852447 A1, wird eine Lösung zur Drehzahlübersetzung vorgestellt, bei der der Elektromotor über einen Schneckenantrieb an das, als Planetengetriebe ausgebildete, Übersetzungsgetriebe angekoppelt ist. Hier ist die Getriebeeinheit karosseriefest angeordnet, sodass der Fahrer nicht das gesamte Drehmoment, das durch den Elektromotor eingeleitet wird, mit dem Steuerrad abstützen muss. Allerdings ist auch mit dieser Lösung eine Reihe von Nachteilen verbunden. Die Einkopplung über ein Schneckengetriebe führt zu sehr kleinen Wirkungsgraden der Drehzahlübersetzung. Weiterhin benötigt die Anordnung erheblichen Bauraum, der durch die geometrisch bestimmten Lagen der Komponenten zueinander wenig flexibel ist. Auch hier wird eine zusätzliche Hilfskraftunterstützung an anderer Stelle benötigt.

Der oben genannte Stand der Technik hat gemeinsam zudem noch weitere Nachteile. Alle Lenksysteme benötigen ein Höchstmaß an Sicherheit bezüglich des Ausfalls der elektrischen Komponenten. So muss das Fahrzeug auch bei Ausfall der Elektromotoren weiter steuerbar bleiben. Das bedeutet für den oben gezeigten Stand der Technik, dass bei Stromausfall oder sonstiger Störung das durch das Steuerrad eingeleitete Drehmoment nicht in den Elektromotor eingeleitet werden darf. Hierzu werden die Getriebe mit entsprechend hohen Übersetzungen mit Selbsthemmung ausgelegt. Das führt aber zu geringen Wirkungsgraden und langsamen Ansprechzeiten der elektromotorischen Antriebe. Zur Kraftunterstützung der Lenkung (Servolenkung) wird unabhängig von der Veränderung der Drehzahlübersetzung ein zusätzlicher Antrieb benötigt.

Aus der DE 101 59 800 A1 ist ein Überlagerungsgetriebe für eine Überlagerungslenkung für Kraftfahrzeuge bekannt, bei der ein vom Fahrer eingegebener Lenkwinkel bei Bedarf durch einen weiteren Winkel überlagert werden kann. Hierzu ist ein Rotation/Rotationsgetriebe mit mindestens zwei Stufen vorgesehen. Die beiden Stufen werden von zwei Planetengetrieben gebildet, wobei die Planetenräder der beiden Planetengetriebe durch ein gemeinsames Hohlrad getriebetechnisch miteinander gekoppelt sind. Nachteilig ist bei diesem bekannten Überlagerungsgetriebe, dass die beiden Planetengetriebe keine unterschiedlichen Zähnezahlen aufweisen können, weil sie mit einem gemeinsamen Hohlrad getriebetechnisch gekoppelt sind, sodass das Übersetzungsverhältnis nicht geändert werden kann. Nachteilig ist weiter, dass in jedem Fall ein Überlagerungs-Verstellmotor erforderlich ist, der ein Schneckengetriebe antreibt, mit dem der Planetenträger der Abtriebsstufe des zweistufigen Getriebes verstellt wird und dass das von dem Überlagerungs-Verstellmotor eingeleitete Drehmoment ein Reaktionsmoment erzeugt, welches vom Fahrer an der Lenkwelle kompensiert werden muss.

Die Aufgabe der Erfindung besteht darin, die Nachteile des Standes der Technik zu beseitigen und gleichzeitig eine kompakte Baugruppe bereit zu stellen, wobei die Reaktionskraft auf das Lenkrad nicht oder nicht spürbar erhöht werden soll. Gleichzeitig soll das System auf einfache Weise die erforderliche Redundanz für den Fall einer Fehlfunktion der elektrischen Einheiten bieten.

Die Aufgabe wird erfindungsgemäß durch die Merkmale des Anspruchs 1 gelöst. Vorteilhafte Aus- und Weiterbildungen sind in den Ansprüchen 2 bis 21 beschrieben.

Die gesamte Lenkungseinrichtung verfügt erfindungsgemäß über nur einen Elektromotor, der gleichzeitig die Energie für die gewünschte Drehzahlübersetzung und die Hilfskraftunterstützung in das System einleitet. Diese erfindungsgemäße neue Einrichtung, in der sowohl die Übersetzungsverhältnisänderung als auch die Einleitung der Hilfskraft realisiert ist, wird im Weiteren als Lenkausgleichsgetriebe bezeichnet. In das Lenkausgleichsgetriebe werden die Drehmomente vom Steuerrad und vom Elektromotor eingeleitet und das gesamte Drehmoment wird an die Lenkverstellung abgegeben. Dabei ist es unvermeidlich, dass das vom Elektromotor eingeleitete Drehmoment sich zumindest teilweise an dem vom Steuerrad eingeleiteten Drehmoment abstützen muss.

Im Gegensatz zum Stand der Technik wird jedoch das Gehäuse der Übersetzungsverhältnisänderungseinrichtung an der Karosserie des Fahrzeugs befestigt. Durch die Wahl geeigneter mechanischer Übersetzungen im Überlagerungsgetriebe zwischen dem Antrieb vom Elektromotor, der vom Steuerrad angetriebenen Antriebswelle und der Abtriebswelle können jedoch die Drehmomente, die am Steuerrad spürbar werden und die Drehmomente, die zur Verstellung der Räder zur Verfügung gestellt werden, weitgehend nach Wunsch auf ein festes Verhältnis zueinander eingestellt werden. Dabei ist zu beachten, dass der Fahrer zum Steuern eines Fahrzeuges ein Drehmoment Ma benötigt. Durch diese Ausgestaltung wird die Anzahl der Komponenten der Lenkungseinrichtung wesentlich verringert, weil nur ein Elektromotor und damit nur ein Koppelgetriebe in der Lenkungseinrichtung erforderlich ist.

Erfindungsgemäß sind der Elektromotor, die mit dem Steuerrad drehfest verbundene Antriebswelle und die den Rädern zugeordnete Abtriebseinrichtung, beispielsweise eine Abtriebswelle oder Zahnstange, koaxial zueinander angeordnet. Das Lenkausgleichsgetriebe besteht dabei aus zwei in einem Gehäuse gelagerten Planetengetrieben, mit deren Hilfe die entsprechenden Getriebeübersetzungen realisiert werden. Dadurch wird die Bauweise sehr kompakt.

In einer speziellen, der bevorzugten Ausführungsform, wird als Elektromotor ein permanenterregter Synchronmotor verwendet, bei dem der Stator mit den Erregerwicklungen fest mit dem Gehäuse der Einrichtung verbunden ist und der Rotor im Innern koaxial angeordnet ist, die Abtriebseinrichtung umschließt und sein Drehmoment auf den Planetenträger des ersten Planetengetriebes überträgt und damit den ersten Planetenträger in Drehung versetzt. Dadurch werden die Planetenzahnräder in Umlauf versetzt und stützen sich dabei an einer gehäusefesten Hälfte des Hohlrades ab. In Folge wird das Drehmoment auf die zweite drehbare Hohlradhälfte mit einer anderen Zähnezahl als die erste gehäusefeste Hohlradhälfte übertragen. Diese zweite drehbare Hohlradhälfte ist mit einer ersten Hohlradhälfte des zweiten Planetengetriebes drehfest gekoppelt. Auf diese Weise wird das Drehmoment vom ersten auf das zweite Planetengetriebe übertragen. Von dieser Hohlradhälfte wird das Drehmoment auf die Planeten des zweiten Planetenträgers übertragen. Sind die Zähnezahlen der ersten Hohlradhälfte und die Zähnezahl der zweiten Hohlradhälfte des zweiten Planetengetriebes unterschiedlich, wird Drehmoment in den zweiten Planetenträger übertragen. Gleichzeitig ist der zweite Planetenträger im eingekoppelten Zustand mit der Antriebswelle, die mit dem Steuerrad drehfest verbunden ist, drehfest verbunden. Dadurch wird auf den zweiten Planetenträger das Drehmoment der Antriebswelle übertragen. Dabei müssen die vom Elektromotor in den zweiten Planetenträger eingebrachten Drehmomente vom Steuerrad abgestützt werden.

Die Planeten des zweiten Planetenträgers übertragen das Drehmoment auf die zweite Hohlradhälfte des zweiten Planetengetriebes. Durch die Anordnung werden dabei das vom Elektromotor eingeleitete Drehmoment und das vom Steuerrad eingeleitete Drehmoment als Summe in die zweite Hohlradhälfte des zweiten Planetengetriebes eingeleitet.

Die zweite Hohlradhälfte des zweiten Planetengetriebes leitet das Drehmoment direkt in die drehfest verbundene Abtriebseinrichtung ein. Dabei kann die Abtriebseinrichtung eine Abtriebswelle sein oder ein Umwandlungsgetriebe zur Übersetzung der Drehbewegung in eine Translationsbewegung, beispielsweise ein Kugelgewindetrieb.

Die gehäusefeste Anordnung des Stators des Elektromotors mit den Erregerwicklungen ermöglicht eine einfache elektrische Ankopplung des Elektromotors im Fahrzeug.

Weiterhin erhöht die karosseriefeste Anordnung des Lenkausgleichsgetriebes auf einfache konstruktive Weise die Lagestabilität zwischen Steuerrad und Abtrieb. Die Antriebseinheit ist derartig mit einem Funktionsteil des Umlaufgetriebes verbindbar, dass Reaktionskräfte aus dem elektrischen Hilfsantrieb sich nur geringfügig auf die Lenkkraft auswirken.

Entsprechend der vorgestellten Erfindung ist sowohl die Anordnung des Lenkausgleichsgetriebes zwischen Lenkgetriebe und Steuerrad als auch zwischen Lenkgetriebe und Spurstange oder im Lenkgetriebe möglich. Die Auswahl erfolgt nach den jeweiligen Gegebenheiten des Bauraums und nach anderen technischen und kommerziellen Erfordernissen. Für den Fall, dass das Lenkausgleichsgetriebe zwischen Lenkgetriebe und Spurstange angeordnet ist, wird in der Regel die Abtriebswelle direkt mit einem Umwandlungsgetriebe zur Übersetzung einer Drehbewegung in eine Translationsbewegung verbunden sein. Beispielsweise wird hier direkt eine Kugelgewindemutter angetrieben.

In einer vorteilhaften Weiterbildung der Erfindung wird in das Lenkausgleichsgetriebe eine Sicherheitskupplung bzw. eine Schaltung integriert, die im Fehlerfall oder besonderen Fahrzeugsituationen - wie beispielsweise Stromausfall, Rechnerfehler oder ausgeschaltete Zündung usw - eine direkte mechanische Kopplung zwischen An- und Abtriebswelle erzwingt. Das vom Elektromotor eingeleitete Drehmoment läuft dann ins Leere, und der Fahrer hat durch die mechanische Kopplung die vollständige Kontrolle über das Lenkungssystem.

Dieselbe Kupplung kann mit einer anderen Stufe versehen sein, bei der die Antriebswelle und damit das Steuerrad ausgekoppelt oder auch unter Vorspannung gegen Verdrehen eingerastet wird, die Abtriebswelle aber durch den Elektromotor durch ein Steuergerät angesteuert wird. Dieser letzte Fall kann beispielsweise zum automatisierten Einparken verwendet werden. Auf diese Weise können sogar Funktionen, die sonst nur mit einem steer-by-wire-System dargestellt werden können, realisiert werden.

In einer alternativen Ausführungsform ist der Elektromotor parallel zur Achse des Lenkausgleichsgetriebes angeordnet und wird über ein Stirnrad- oder Riemen- oder Kettengetriebe an das Übersetzungs- und Antriebsgetriebe eingekoppelt.

Das erfindungsgemäße Getriebe kann auch mit einem hydraulischen Antrieb betrieben werden, beispielsweise einem Orbitmotor oder einer "umgekehrten" Flügelzellenpumpe.

Alternativ zur Verwendung von Planetengetrieben können auch andere Umlaufgetriebe, wie beispielsweise Harmonic-Drive-Getriebe, eingesetzt werden. Auch können die Getriebe als Reibradgetriebe ausgebildet sein.

Nachfolgend wird ein Ausführungsbeispiel der Erfindung beschrieben. Es zeigen
- Fig. 1: den schematischen Aufbau eines Lenksystems mit Hilfskraftunterstützung,
- Fig. 2: einen Längsschnitt durch eine bevorzugte Ausführungsform für ein Lenkausgleichsgetriebe mit integrierter Sicherheitskupplung und integriertem "automatic Betrieb", wobei oberhalb der Mittellinie Schaltstellung "manueller Betrieb" und unterhalb der Mittellinie die Schaltstellung "Betrieb mit Servounterstützung" dargestellt ist,
- Fig. 3: einen Längsschnitt entsprechend Fig. 2, wobei hier jedoch oberhalb der Mittellinie Schaltstellung "manueller Betrieb" und unterhalb der Mittellinie die Schaltstellung "automatic Betrieb" dargestellt ist,

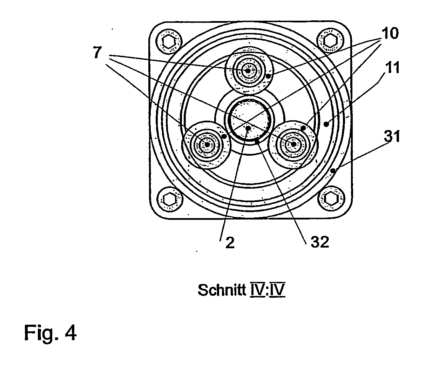

- Fig. 4: einen Querschnitt entlang der Schnittebene IV-IV in Fig. 2 bzw. Fig. 3.

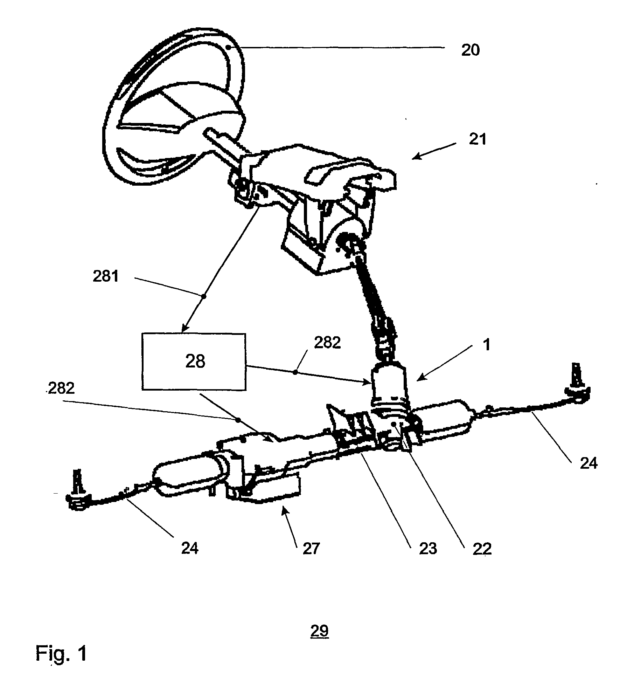

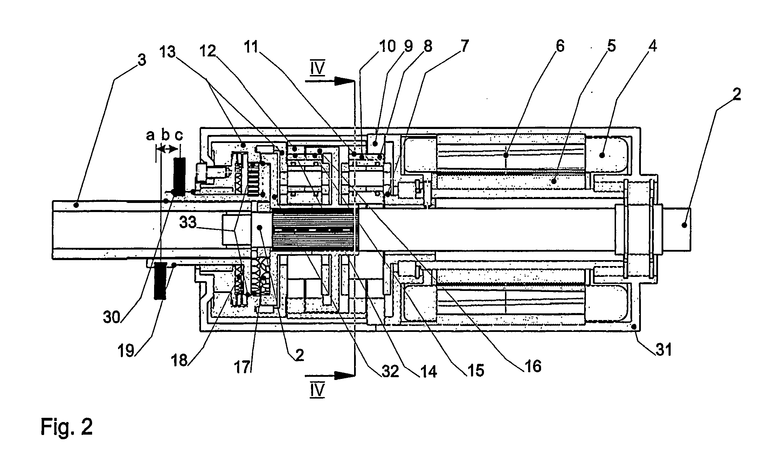

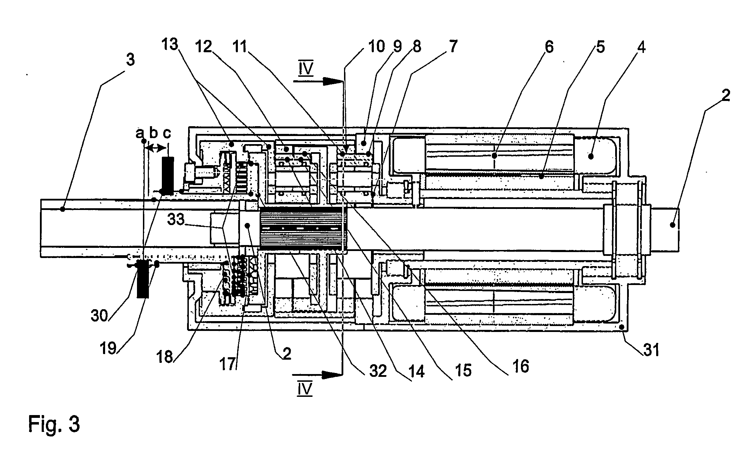

Der in Figur 1 gezeigte schematische Aufbau einer Lenkvorrichtung 29 als steer-by-wire-Anordnung bzw. Lenkvorrichtung 29 mit elektrischer Hilfskraftunterstützung entspricht im Wesentlichen dem Stand der Technik. Sie besteht unter anderem aus einem Steuerrad 20, einer Lenksäule 21, dem Lenkgetriebe 22 und den beiden Spurstangen 24. Die Spurstangen 24 werden durch die Zahnstange 23 angetrieben. Als Antrieb dient das erfindungsgemäße Lenkausgleichsgetriebe 1 oder 27, das in den Figuren 2 und 3 näher gezeigt ist. Je nach Ausführungsform befindet sich das Lenkausgleichsgetriebe entweder zwischen Steuerrad 20 und Lenkgetriebe 22 (Pos. 1) oder zwischen Lenkgetriebe 22 und Spurstangen 24 (Pos. 27) . Das Lenkausgleichsgetriebe 27 enthält dann ein Umwandlungsgetriebe zur Übersetzung der Drehbewegung in eine Translationsbewegung, beispielsweise einen Kugelgewindetrieb. Dabei wird - im Normalfall - der Fahrerwunsch durch das Steuerrad 20 über eine hier nicht gezeigte Sensorik als Signal 281 in ein Steuergerät 28 eingespeist. Im Steuergerät 28 wird daraus, gegebenenfalls unter Zuhilfenahme eines Sensorsignals der Antriebseinheit (hier nicht dargestellt) und weiterer den Fahrzeugzustand beschreibender Signale, die entsprechende Steuerspannung 282 für den Elektromotor oder Servomotor bestimmt und an den Servomotor, der im Lenkausgleichsgetriebe 1 oder 27 angeordnet ist, ausgegeben.

Die Figuren 2 und 3 zeigen eine Ausführungsform des Lenkausgleichsgetriebes 1 in der Anordnung zwischen Steuerrad 20 und Lenkgetriebe 22 mit integrierter Sicherheitskupplung und integrierter Umschaltkupplung auf "automatic Betrieb".

Dargestellt sind die mit dem Ritzel des Lenkgetriebes 22 drehfest verbundene Abtriebswelle 2, die mit dem Steuerrad 20 drehfest verbundene Antriebswelle 3, die Erregerwicklungen 4 des Antriebsmotors, die am Rotor drehfest angeordneten Permanentmagneten 5 des Antriebsmotors sowie die beiden Planetengetriebe und die Mehrfachkupplung.

Die Mehrfachkupplung besitzt die Schaltstellungen a, b oder c, die durch einen angedeuteten Schalthebel 30 gesteuert werden. In Schaltstellung a ist die Kupplung 17 eingekuppelt und es wird ein "automatic Betrieb", der auch einem "steer-by-wire-Modus" entsprechen kann, d.h. es wird ein automatischer Lenkmodus ohne Fahrereingriff am Steuerrad 20 realisiert. Das Steuerrad ist arretiert, kann aber bei entsprechender Auslegung der Kupplung 18 mit Gewalt verdreht werden. In der Schaltstellung b ist der Betrieb mit Servounterstützung realisiert. Hier werden die Drehmomente vom Elektromotor und von der Lenksäule überlagert. Die auf das Steuerrad 20 ausgeübte Lenkkraft wird durch den Elektromotor verstärkt. Gleichzeitig kann bei entsprechender Ansteuerung des Motors die Drehzahl übersetzt werden, sodass bei kleiner Verdrehung am Steuerrad 20 eine elektrisch einstellbare, prinzipiell beliebig große Verdrehung der Abtriebswelle 2 ermöglicht wird. In der Schaltstellung c ist die Antriebswelle 3 mit der Abtriebswelle 2 direkt mechanisch verbunden und der Elektromotor ist ausgekuppelt. Diese Schaltstellung c ist als mechanische Rückfallösung für den Fall eines Versagens der Elektronik oder der Spannungsversorgung, bei ausgeschalteter Zündung oder anderen Sondersituationen des Fahrzeuges, vorgesehen.

Die Mehrfachkupplung wird durch die Schaltmuffe 19 mittels des Schalthebels 30 betätigt. Die Schaltmuffe 19 ist in der vorgestellten Ausführungsform drehfest mit der Antriebswelle 3 verbunden. In der Schaltstellung a sind die Kupplungen 18 und 33 eingekoppelt und die Kupplung 17 ausgekoppelt. In der Schaltstellung b sind die Kupplungen 17 und 18 ausgekoppelt und die Kupplung 33 eingekoppelt. In der Schaltstellung c ist die Kupplung 17 eingekoppelt und die Kupplungen 18 und 33 ausgekoppelt. Alle Kupplungen sind in der gezeigten Ausführungsform durch entsprechende Verzahnungen realisiert.

Der Fluss des Drehmomentes erfolgt, ausgehend vom Elektromotor und der Antriebswelle 3, über die beiden Planetengetriebe in die Abtriebswelle 2.

Dabei erfolgt der Fluss des Drehmomentes vom Rotor des Elektromotors über einen mit dem Rotor des Antriebsmotors drehfest verbundenen ersten Planetenträger 7 in ein erstes Planetengetriebe. Dieses Planetengetriebe weist jeweils axial geteilte Planetenräder, bestehend aus Planetenradhälften 8, 10, die drehfest miteinander gekoppelt sind und Hohlrädern, bestehend aus Hohlradhälften 9, 11, auf. Die auf dem ersten Planetenträger 7 gelagerten Planetenradhälften 8 stützen sich in der fest mit dem Gehäuse 31 verbundenen Hohlradhälfte 9 ab. Über die Planetenradhälften 10, die auch einteilig mit den Planetenradhälften 8 ausgebildet sein können, wird das Drehmoment in die drehbar gelagerte Hohlradhälfte 11 eingeleitet, die wiederum das Drehmoment in ein gleichartig aufgebautes zweites Planetengetriebe weiterleitet. Mit der Hohlradhälfte 11 des ersten Planetengetriebes ist eine Hohlradhälfte 12 des zweiten Planetengetriebes drehfest angebunden. Über Planetenradhälften 14 wird das Drehmoment in den Planetenträger 13 des zweiten Planetengetriebes einleitet. Alternativ zur drehfesten Kopplung oder einteiligen Ausbildung der Planetenradhälften 8 und 10 bzw. 14 und 15, können in den jeweiligen Planetenradgetrieben auch frei drehende Sonnenräder (hier nicht gezeigt) angeordnet sein, über die das Drehmoment von der jeweils ersten Planetenradhälfte 8 oder 15 auf die zweite Planetenradhälfte 9 bzw. 14 übertragen wird. Je nach Schaltstellung a, b oder c ändert sich jetzt der Fluss des Drehmomentes.

In der Schaltstellung a, dem "automatic Betrieb", ist das Steuerrad 20 über die Kupplung 18 mit dem Gehäuse 31 und gleichzeitig über die Kupplung 33 mit dem Planetenträger 13 des zweiten Planetengetriebes drehfest verbunden, sodass der Planetenträger 13 sich nicht gegenüber dem Gehäuse 31 und damit dem Fahrzeug verdrehen kann. Das gesamte Drehmoment wird folglich unmittelbar über die Planetenradhälften 14 in die Planetenradhälften 15, die auch einteilig mit den Planetenradhälften 14 ausgebildet sein können, in die Hohlradhälfte 16 und damit in die Abtriebseinrichtung 32 eingeleitet. Beispielsweise über eine Verzahnung wird das Drehmoment von der Abtriebseinrichtung 32 direkt in die Abtriebswelle 2 und damit in das Lenkgetriebe eingeleitet.

In der Schaltstellung b, dem "Betrieb mit Servounterstützung", wird das Drehmoment, ausgehend vom Fahrer, von der Antriebswelle 3 über die Kupplung 33 in den Planetenträger 13 eingeleitet. Die Summe der Drehmomente vom Elektromotor und von der Antriebswelle 3 werden, wie in Schaltstellung a, über die Planetenradhälften 14, 15 in die Hohlradhälfte 16 und dem mit ihr verbundenen Abtriebselement 32 und von da in die Abtriebswelle 2 eingeleitet. Entsprechend den Zähnezahlen der Planetenradhälften 8, 10, 14, 15 und Hohlradhälften 9, 11, 12, 16 der beteiligten Planetengetriebe erfolgt die Aufteilung des Drehmoments bezüglich der Antriebswelle 3, der Abtriebswelle 2 und dem Rotor des Elektromotors.

In der Schaltstellung c, dem "manuellen Betrieb", ist die Antriebswelle 3 über die Kupplung 17 direkt mit der Abtriebswelle 2 gekuppelt. Weil die Kupplung 33 ausgekuppelt ist, dreht der Planetenträger 13 völlig frei. Vom Rotor des Elektromotors wird keinerlei Drehmoment in das Lenkgetriebe eingeleitet. Der Fahrer hat die vollständige Kontrolle über die Richtungssteuerung des Fahrzeugs.

Das Lenkausgleichsgetriebe 1 ist in der gezeigten Ausführungsform zwischen Steuerrad 20 und Lenkgetriebe 22 angeordnet. Dabei kann es an einer beliebigen Stelle, beispielsweise auch innerhalb der Lenksäule 21 oder einem Führungskasten (hier nicht speziell gezeigt), angeordnet sein.

In einer weiteren Ausführungsform ist das Lenkausgleichsgetriebe 27 zwischen dem Lenkgetriebe 22 und den Spurstangen 24 angeordnet. In diesem Fall ist die Abtriebseinrichtung 32 als Umwandlungsgetriebe zur Übersetzung einer Drehbewegung in eine Translationsbewegung ausgebildet. Im einfachsten und erfindungsgemäß bevorzugten Fall wird hier direkt eine Kugelgewindemutter als Abtriebseinrichtung 32 ausgewählt. Die Abtriebswelle 2 führt in diesem Fall keine Drehbewegung, sondern eine Translation aus.

### Bezugszeichenliste

- 1: Lenkausgleichsgetriebe
- 2: Abtriebswelle, Abtriebseinrichtung
- 3: Antriebswelle
- 4: Erregerwicklungen
- 5: Permanentmagneten
- 6: Stator
- 7: erster Planetenträger
- 8: Planetenradhälfte
- 9: Hohlradhälfte
- 10: Planetenradhälfte
- 11: Hohlradhälfte
- 12: Hohlradhälfte
- 13: Planetenträger
- 14: Planetenradhälfte
- 15: Planetenradhälfte
- 16: Hohlradhälfte
- 17: Kupplung
- 18: Kupplung
- 19: Schaltmuffe
- 20: Steuerrad
- 21: Lenksäule
- 22: Lenkgetriebe
- 23: Zahnstange
- 24: Spurstange
- 27: Lenkausgleichsgetriebe
- 28: Steuergerät
- 29: Lenkvorrichtung
- 30: Schalthebel
- 31: Gehäuse
- 32: Abtriebswelle, Abtriebselement, Abtriebseinrichtung
- 33: Kupplungsverzahnung
- 281: Signal Fahrerwunsch
- 282: Steuerspannung Elektromotor
- a: Schaltstellung "automatic Betrieb"
- b: Schaltstellung "Betrieb mit Servounterstützung"
- c: Schaltstellung "manueller Betrieb"

## Patentansprüche

1. Fahrzeuglenkung mit einer Übersetzungsverhältnisänderungseinrichtung und einem elektrischen Hilfsantrieb, wobei die Übersetzungsverhältnisänderungseinrichtung einen Stator (6) und einen Rotor aufweisenden Hilfsantrieb enthält, der die Steuereingriffe des Fahrers über ein Steuerrad (20) überlagert und auf die Lenkbewegung der Räder überträgt und ein Gehäuse (31), eine vom Steuerrad (20) antreibbare Antriebswelle (3) und ein mit den gelenkten Rädern verbundenes Abtriebselement (32) sowie mindestens zwei Umlaufgetriebe aufweist, wobei eines der Umlaufgetriebe durch den Rotor eines Elektromotors antreibbar ist, das Antriebsmoment, ausgehend vom Steuerrad (20), durch das Antriebsmoment vom Elektromotor überlagert wird und gemeinsam als Abtriebsmoment in das Abtriebselement (32) eingeleitet wird, wobei das Verhältnis der Drehzahlen von Antriebswelle (3) zu Abtriebselement (32) einstellbar ist, **dadurch gekennzeichnet, dass** das erste Umlaufgetriebe ein in axialer Richtung in zwei Hohlradhälften (9, 11) zweigeteiltes Hohlrad aufweist, wobei die eine Hohlradhälfte (9) fest mit dem Gehäuse (31) verbunden und die andere Hohlradhälfte (11) drehbar ist, und dass die beiden Umlaufgetriebe über die drehbare Hohlradhälfte (11) miteinander derart gekoppelt sind, dass die drehbare Hohlradhälfte (11) ein Drehmoment in das zweite Umlaufgetriebe weiterleitet.

2. Fahrzeuglenkung nach Anspruch 1, **dadurch gekennzeichnet, dass** das Gehäuse (31) drehfest mit dem Kraftfahrzeug verbunden ist.

3. Fahrzeuglenkung nach Anspruch 1 oder Anspruch 2, **dadurch gekennzeichnet, dass** die Drehbewegung des Steuerrades (20) über die Antriebswelle (3) in eines der Funktionsteile eines der Umlaufgetriebe einleitbar ist.

4. Fahrzeuglenkung nach Anspruch 3, **dadurch gekennzeichnet, dass** die Drehbewegung des Steuerrades (20) mittels einer Kupplung mit dem zugehörigen Funktionsteil des zugehörigen Umlaufgetriebes verbindbar ist.

5. Fahrzeuglenkung nach einem oder mehreren der Ansprüche 3 bis 4, **dadurch gekennzeichnet, dass** die Drehbewegung des Steuerrades (20) mittels einer weiteren Kupplung blockierbar ist.

6. Fahrzeuglenkung nach einem oder mehreren der Ansprüche 1 bis 5, **dadurch gekennzeichnet, dass** die Drehbewegung des Steuerrades (20) mittels einer dritten Kupplung direkt auf das Abtriebselement (32) weitergeleitet wird, wobei durch das Trennen einer oder beider der anderen Kupplungen der elektrische Hilfskraftantrieb abgetrennt ist.

7. Fahrzeuglenkung nach einem oder mehreren der Ansprüche 5 bis 6, **dadurch gekennzeichnet, dass** die drei Kupplungen in einer Kupplungseinheit zusammengefasst sind.

8. Fahrzeuglenkung nach einem oder mehreren der Ansprüche 5 bis 7, **dadurch gekennzeichnet, dass** die Kupplungen als Formschlusskupplungen ausgebildet sind.

9. Fahrzeuglenkung nach einem oder mehreren der Ansprüche 1 bis 8, **dadurch gekennzeichnet, dass** der Elektromotor, die Antriebswelle (3), das Abtriebselement (32) und die beiden Umlaufgetriebe koaxial zueinander angeordnet sind.

10. Fahrzeuglenkung nach einem oder mehreren der Ansprüche 1 bis 9, **dadurch gekennzeichnet, dass** ein Lenkausgleichsgetriebe (1) zwischen Steuerrad (20) und Lenkgetriebe (22) angeordnet ist und die Antriebswelle (3), das Abtriebselement (32) und die Abtriebseinrichtung (2) zur Übertragung einer Drehbewegung ausgebildet sind.

11. Fahrzeuglenkung nach einem oder mehreren der Ansprüche 1 bis 9, **dadurch gekennzeichnet, dass** sie ein Umwandlungsgetriebe zur Übersetzung einer Drehbewegung in eine Translationsbewegung, beispielsweise eine Kugelgewindemutter, aufweist und zwischen Lenkgetriebe (22) und mindestens einer Spurstange (24) angeordnet ist und die Antriebswelle (3) und das Abtriebselement (32) zur Übertragung einer Drehbewegung ausgebildet sind und die Abtriebseinrichtung (2) zur Übertragung einer Translationsbewegung ausgebildet ist.

12. Fahrzeuglenkung nach einem oder mehreren der Ansprüche 1 bis 11, **dadurch gekennzeichnet, dass** die Drehzahl und Drehrichtung des Abtriebselements (32) aufgrund der Auswertung der aktuellen Fahrzeugsituation von einem Steuergerät (28) vorgegeben und über eine entsprechende Steuerung des elektrischen Hilfsantriebes eingestellt wird.

13. Fahrzeuglenkung nach einem oder mehreren der Ansprüche 1 bis 12, **dadurch gekennzeichnet, dass** als elektrischer Hilfsantrieb nur ein einziger elektrischer Motor verwendet wird.

14. Fahrzeuglenkung nach einem oder mehreren der Ansprüche 1 bis 13, **dadurch gekennzeichnet, dass** die Umlaufgetriebe als Planetengetriebe ausgebildet sind.

15. Fahrzeuglenkung nach einem der Ansprüche 1 bis 14, **dadurch gekennzeichnet, dass** die Umlaufgetriebe als Planetengetriebe und die Hohlräder beider Planetengetriebe in axialer Richtung zweigeteilt ausgebildet sind.

16. Fahrzeuglenkung nach einem der Ansprüche 1 bis 15, **dadurch gekennzeichnet, dass** die Umlaufgetriebe als Planetengetriebe und die Planetenräder beider Planetengetriebe in axialer Richtung zweigeteilt ausgebildet sind.

17. Fahrzeuglenkung nach einem der Ansprüche 1 bis 16, **dadurch gekennzeichnet, dass** die Teile der Hohlräder und/oder der Planetenräder zueinander unterschiedliche Zähnezahlen aufweisen.

18. Fahrzeuglenkung nach einem oder mehreren der Ansprüche 1 bis 17, **dadurch gekennzeichnet, dass**
- der Rotor des Elektromotors mit dem Planetenträger (7) des ersten Planetengetriebes,
- ein Teil (9) des Hohlrades des ersten Planetengetriebes mit dem Gehäuse (31),
- das zweite Teil (11) des Hohlrades des ersten Planetengetriebes mit dem ersten Teil (12) des Hohlrades des zweiten Planetengetriebes und
- das zweite Teil (16) des Hohlrades des zweiten Planetengetriebes mit der Abtriebswelle (2) verbunden ist,
- die jeweils in die Teile (9, 11) des Hohlrades des ersten Planetengetriebe eingreifenden Planetenradhälften (8, 10) miteinander drehfest gekoppelt sind,
- die jeweils in die Teile (12, 16) des Hohlrades des zweiten Planetengetriebe eingreifenden Planetenradhälften (14, 15) miteinander drehfest gekoppelt sind und
- der Planetenträger (13) des zweiten Planetengetriebes schaltbar mit
- der mit dem Steuerrad (20) verbundenen Antriebswelle (3),
- dem Gehäuse (31) oder
- keinem anderem Getriebeteil verbindbar ist, wobei dann die Antriebswelle (3) direkt mit der Abtriebswelle (2) verbunden ist.

19. Fahrzeuglenkung nach einem oder mehreren der Ansprüche 1 bis 17, **dadurch gekennzeichnet, dass**
- der Rotor des Elektromotors mit dem Planetenträger (7) des ersten Planetengetriebes,
- ein Teil (9) des Hohlrades des ersten Planetengetriebes mit dem Gehäuse (31),
- das zweite Teil (11) des Hohlrades des ersten Planetengetriebes mit dem ersten Teil (12) des Hohlrades des zweiten Planetengetriebes und
- das zweite Teil (16) des Hohlrades des zweiten Planetengetriebes mit der Abtriebswelle (2) verbunden ist,
- die jeweils einteiligen Sonnenräder der Planetengetriebe frei drehbar gelagert sind und
- der Planetenträger (13) des zweiten Planetengetriebes schaltbar mit
- der mit dem Steuerrad (20) verbundenen Antriebswelle (3),
- dem Gehäuse (31) oder
- keinem anderem Getriebeteil verbindbar ist, wobei dann die Antriebswelle (3) direkt mit der Abtriebswelle (2) verbunden ist.

20. Fahrzeuglenkung nach Anspruch 18 oder Anspruch 19, **dadurch gekennzeichnet, dass** die Schaltstellung, bei der die Antriebswelle (3) direkt mit der Abtriebswelle (2) verbunden ist, als Sicherheitsschaltstellung automatisch bei einer Störung des Lenkausgleichsgetriebes, insbesondere bei Ausfall der Motorspannung, angesteuert wird.

21. Fahrzeuglenkung nach Anspruch 20, **dadurch gekennzeichnet, dass** die Ansteuerung mechanisch erfolgt.

## Claims

1. Vehicle steering gear having a transmission ratio-changing device and an electric auxiliary drive, wherein the transmission ratio-changing device contains a stator (6) and an auxiliary drive which comprises a rotor and superposes the steering interventions by the driver via a steering wheel (20) and transfers them to the steering movement of the wheels and comprises a housing (31), a drive shaft (3) which can be driven by the steering wheel (20) and a driven element (32) connected to the steered wheels as well as at least two epicyclic gear systems, wherein one of the epicyclic gear systems can be driven by the rotor of an electric motor, the driving torque, starting from the steering wheel (20), is superposed by the driving torque from the electric motor and is introduced together into the driven element (21) as driven torque, wherein the ratio of the rotational speeds of the drive shaft (3) with respect to the driven element (32) can be adjusted, **characterised in that** the first epicyclic gear system comprises an internal gear split in the axial direction into two internal gear halves (9, 11), wherein one internal gear half (9) is fixedly connected to the housing (31) and the other internal gear half (11) is rotatable, and **in that** the two epicyclic gear systems are coupled together via the rotatable internal gear half (11) such that the rotatable internal gear half (11) transmits torque into the second epicyclic gear system.

2. Vehicle steering gear as claimed in Claim 1, **characterised in that** the housing (31) is connected to the motor vehicle in a rotationally-fixed manner.

3. Vehicle steering gear as claimed in Claim 1 or Claim 2, **characterised in that** the rotational movement of the steering wheel (20) can be introduced via the drive shaft (3) into one of the functional parts of one of the epicyclic gear systems.

4. Vehicle steering gear as claimed in Claim 3, **characterised in that** the rotational movement of the steering wheel (20) can be connected to the associated functional part of the associated epicyclic gear system by means of a coupling.

5. Vehicle steering gear as claimed in any one or several of Claims 3 to 4, **characterised in that** the rotational movement of the steering wheel (20) can be inhibited by means of a further coupling.

6. Vehicle steering gear as claimed in any one or several of Claims 1 to 5, **characterised in that** the rotational movement of the steering wheel (20) is directly transmitted to the driven element (32) by means of a third coupling, wherein the electric auxiliary force drive is cut-off by separating one or two of the other couplings.

7. Vehicle steering gear as claimed in any one or several of Claims 5 to 6, **characterised in that** the three couplings are combined in one coupling unit.

8. Vehicle steering gear as claimed in any one or several of Claims 5 to 7, **characterised in that** the couplings are formed as positive-locking couplings.

9. Vehicle steering gear as claimed in any one or several of Claims 1 to 8, **characterised in that** the electric motor, the drive shaft (3), the driven element (32) and the two epicyclic gear systems are disposed co-axially with respect to each other.

10. Vehicle steering gear as claimed in any one or several of Claims 1 to 9, **characterised in that** a steering differential gear (1) is disposed between the steering wheel (20) and the steering gear (22), and the drive shaft (3), the driven element (32) and the driven device (2) are formed so as to transmit a rotational movement.

11. Vehicle steering gear as claimed in any one or several of Claims 1 to 9, **characterised in that** it comprises a conversion gear for translating a rotational movement into a translational movement, for example a ball screw nut, and is disposed between the steering gear (22) and at least one steering link (24), and the drive shaft (3) and the driven element (32) are formed so as to transmit a rotational movement and the driven device (2) is formed so as to transmit a translational movement.

12. Vehicle steering gear as claimed in any one or several of Claims 1 to 11, **characterised in that** the rotational speed and rotational direction of the driven element (32) are predetermined by a control device (28) on the basis of the evaluation of the current vehicle situation and are set via a corresponding control of the electric auxiliary drive.

13. Vehicle steering gear as claimed in any one or several of Claims 1 to 12, **characterised in that** only a single electric motor is used as the electric auxiliary drive.

14. Vehicle steering gear as claimed in any one or several of Claims 1 to 13, **characterised in that** the epicyclic gear systems are formed as planetary gear systems.

15. Vehicle steering gear as claimed in any one of Claims 1 to 14, **characterised in that** the epicyclic gear systems are formed as planetary gear systems and the internal gears of the two planetary gear systems are formed so as to be split into two in the axial direction.

16. Vehicle steering gear as claimed in any one of Claims 1 to 15, **characterised in that** the epicyclic gear systems are formed as planetary gear systems and the planet wheels of the two planetary gear systems are formed so as to be split into two in the axial direction.

17. Vehicle steering gear as claimed in any one of Claims 1 to 16, **characterised in that** the parts of the internal gears and/or the planet wheels have a different number of teeth with respect to each other.

18. Vehicle steering gear as claimed in any one or several of Claims 1 to 17,
**characterised in that**
- the rotor of the electric motor is connected to the planet wheel carrier (7) of the first planetary gear system,
- one part (9) of the internal gear of the first planetary gear system is connected to the housing (31),
- the second part (11) of the internal gear of the first planetary gear system is connected to the first part (12) of the internal gear of the second planetary gear system, and
- the second part (16) of the internal gear of the second planetary gear system is connected to the driven shaft (2),
- the planet wheel halves (8, 10) engaging in each case in the parts (9, 11) of the internal gear of the first planetary gear system are coupled to each other in a rotationally-fixed manner,
- the planet wheel halves (14, 15) engaging in each case in the parts (12, 16) of the internal gear of the second planetary gear system are coupled to each other in a rotationally-fixed manner, and
- the planet wheel carrier (13) of the second planetary gear system can be switchably connected to
- the drive shaft (3) connected to the steering wheel (20),
- the housing (31), or
- no other part of the gear system, wherein **in that** case the drive shaft (3) is directly connected to the driven shaft (2).

19. Vehicle steering gear as claimed in any one or several of Claims 1 to 17,
**characterised in that**
- the rotor of the electric motor is connected to the planet wheel carrier (7) of the first planetary gear system,
- one part (9) of the internal gear of the first planetary gear system is connected to the housing (31),
- the second part (11) of the internal gear of the first planetary gear system is connected to the first part (12) of the internal gear of the second planetary gear system, and
- the second part (16) of the internal gear of the second planetary gear system is connected to the driven shaft (2),
- the sun wheels, in each case formed as a single piece, of the planetary gear systems are mounted so as to be freely rotatable, and
- the planet wheel carrier (13) of the second planetary gear system can be switchably connected to
- the drive shaft (3) connected to the steering wheel (20),
- the housing (31), or
- no other part of the gear system, wherein **in that** case the drive shaft (3) is directly connected to the driven shaft (2).

20. Vehicle steering gear as claimed in Claim 18 or Claim 19, **characterised in that** the switching position in which the drive shaft (3) is directly connected to the driven shaft (2) is automatically activated as the safety switching position when the steering differential gear malfunctions, in particular when there is a loss of motor voltage.

21. Vehicle steering gear as claimed in Claim 20, **characterised in that** the activation is effected mechanically.

## Revendications

1. Système de conduite d'un véhicule, avec un dispositif pour changer le rapport de transmission et un entraînement auxiliaire électrique, le dispositif pour changer le rapport de transmission comprenant un stator (6) et un entraînement auxiliaire comprenant un rotor, qui se superpose aux interventions du conducteur par l'intermédiaire d'un volant de direction (20), et les transfère au mouvement directionnel des roues, et présente un carter (31), un arbre moteur (3) pouvant être mené par le volant de direction (20) et un organe mené (32) relié aux roues directrices, de même qu'au moins deux transmissions épicycloïdales, l'une des transmissions épicycloïdales pouvant être menée par le rotor d'un moteur électrique, le couple moteur du moteur électrique étant superposé au couple moteur provenant du volant de direction (20) et l'ensemble étant transmis comme couple de sortie à l'organe mené (32), le rapport des vitesses de rotation de l'arbre moteur (3) et de l'organe mené (32) étant ainsi ajustable, **caractérisé en ce que** la première transmission épicycloïdale présente une couronne dentée divisée en deux demi-couronnes dentées (9, 11) dans une direction axiale, l'une (9) des demi-couronnes dentées étant reliée de manière fixe au carter (31) et l'autre (11) demi-couronne dentée pouvant tourner, et **en ce que** les deux transmissions épicycloïdales sont accouplées ensemble par l'intermédiaire de la demi-couronne dentée (11) rotative, de telle sorte que la demi-couronne dentée rotative (11) transmet un couple de rotation à la seconde transmission épicycloïdale.

2. Système de conduite d'un véhicule selon la revendication 1, **caractérisé en ce que** le carter (31) est relié de manière fixe au véhicule.

3. Système de conduite d'un véhicule selon la revendication 1 ou la revendication 2, **caractérisé en ce que** le mouvement de rotation du volant de direction (20) peut être transmis par l'intermédiaire de l'arbre moteur (3) à l'une des parties fonctionnelles de l'une des transmissions épicycloïdales.

4. Système de conduite d'un véhicule selon la revendication 3, **caractérisé en ce que** le mouvement de rotation du volant de direction (20) peut être relié au moyen d'un accouplement à la partie fonctionnelle correspondante de la transmission épicycloïdale correspondante.

5. Système de conduite d'un véhicule selon une ou plusieurs des revendications 3 à 4, **caractérisé en ce que** le mouvement de rotation du volant de direction (20) peut être bloqué au moyen d'un accouplement supplémentaire.

6. Système de conduite d'un véhicule selon une ou plusieurs des revendications 1 à 5, **caractérisé en ce que** le mouvement de rotation du volant de direction (20) peut être transmis directement à l'organe mené (32) au moyen d'un troisième accouplement, ce qui fait que, par déconnexion de l'un ou des deux autres accouplements, l'entraînement auxiliaire électrique est déconnecté.

7. Système de conduite d'un véhicule selon une ou plusieurs des revendications 5 à 6, **caractérisé en ce que** les trois accouplements sont rassemblés dans une unité d'accouplement.

8. Système de conduite d'un véhicule selon une ou plusieurs des revendications 5 à 7, **caractérisé en ce que** les accouplements sont réalisés sous la forme d'accouplements par emboîtement.

9. Système de conduite d'un véhicule selon une ou plusieurs des revendications 1 à 8, **caractérisé en ce que** le moteur électrique, l'arbre moteur (3), l'organe mené (32) et les deux transmissions épicycloïdales sont agencées coaxialement l'un à l'autre.

10. Système de conduite d'un véhicule selon une ou plusieurs des revendications 1 à 9, **caractérisé en ce qu'**un différentiel de direction (1) est agencé entre le volant de direction (20) et un mécanisme de direction (22), et l'arbre moteur (3), l'organe mené (32) et le dispositif mené (2) sont réalisés pour transmettre un mouvement de rotation.

11. Système de conduite d'un véhicule selon une ou plusieurs des revendications 1 à 9, **caractérisé en ce qu'**il comprend un mécanisme de conversion, pour transformer un mouvement de rotation en un mouvement de translation, par exemple un écrou à billes, et est agencé entre un mécanisme de direction (22) et au moins une barre de liaison (24), et l'arbre moteur (3) et l'organe mené (32) sont réalisés pour transmettre un mouvement de rotation, et le dispositif mené (2) est réalisé pour transmettre un mouvement de translation.

12. Système de conduite d'un véhicule selon une ou plusieurs des revendications 1 à 11, **caractérisé en ce que** la vitesse de rotation et la direction de rotation de l'organe mené (32) sont prédéterminées par un mécanisme de direction (28) sur base d'une évaluation de la situation de conduite réelle, et sont ajustées par l'intermédiaire d'une commande correspondante du mécanisme auxiliaire électrique.

13. Système de conduite d'un véhicule selon une ou plusieurs des revendications 1 à 12, **caractérisé en ce qu'**un seul moteur électrique est utilisé comme entraînement auxiliaire électrique.

14. Système de conduite d'un véhicule selon une ou plusieurs des revendications 1 à 13, **caractérisé en ce que** les transmissions épicycloïdales sont réalisées sous la forme de transmissions planétaires.

15. Système de conduite d'un véhicule selon l'une des revendications 1 à 14, **caractérisé en ce que** les transmissions épicycloïdales sont réalisées sous la forme de transmissions planétaires, et les couronnes dentées des deux transmissions planétaires sont divisées en deux dans une direction axiale.

16. Système de conduite d'un véhicule selon l'une des revendications 1 à 15, **caractérisé en ce que** les transmissions épicycloïdales sont réalisées sous la forme de transmissions planétaires, et les satellites des deux transmissions planétaires sont divisés en deux dans une direction axiale.

17. Système de conduite d'un véhicule selon l'une des revendications 1 à 16, **caractérisé en ce que** les pièces des couronnes dentées et/ou des satellites présentent des nombres de dents différents.

18. Système de conduite d'un véhicule selon une ou plusieurs des revendications 1 à 17, **caractérisé en ce que**
- le rotor du moteur électrique est relié au porte-satellite (7) de la première transmission planétaire,
- une partie (9) de la couronne dentée de la première transmission planétaire est reliée au carter (31),
- la seconde partie (11) de la couronne dentée de la première transmission planétaire est reliée à la première partie (12) de la couronne dentée de la seconde transmission planétaire, et la seconde partie (16) de la couronne dentée de la seconde transmission planétaire est reliée à l'arbre mené (2),
- les demi-satellites (8, 10) s'engageant chaque fois avec les parties (9, 11) de la couronne dentée de la première transmission planétaire sont accouplées de manière fixe,
- les demi-satellites (14, 15) s'engageant chaque fois avec les parties (12, 16) de la couronne dentée de la deuxième transmission planétaire sont accouplées de manière fixe, et
- le porte satellite (13) de la seconde transmission planétaire peut être relié de manière commutable avec
- l'arbre moteur (3) relié au volant de direction (20),
- le carter (31) ou
- aucune autre pièce du mécanisme, l'arbre moteur (3) étant alors relié directement à l'arbre mené (2).

19. Système de conduite d'un véhicule selon une ou plusieurs des revendications 1 à 17, **caractérisé en ce que**
- le rotor du moteur électrique est relié au porte-satellite (7) de la première transmission planétaire,
- une partie (9) de la couronne dentée de la première transmission planétaire est reliée au carter (31),
- la seconde partie (11) de la couronne dentée de la première transmission planétaire est reliée à la première partie (12) de la couronne dentée de la seconde transmission planétaire, et
- la seconde partie (16) de la couronne dentée de la seconde transmission planétaire est reliée à l'arbre mené (2),
- les roues solaires d'une pièce des transissions planétaires sont montées à rotation libre, et
- le porte satellite (13) de la seconde transmission planétaire peut être relié de manière commutable avec
- l'arbre moteur (3) relié au volant de direction (20),
- le carter (31) ou
- aucune autre pièce du mécanisme, l'arbre moteur (3) étant alors relié directement à l'arbre mené (2).

20. Système de conduite d'un véhicule selon la revendication 18 ou la revendication 19, **caractérisé en ce que** la position de commutation pour laquelle l'arbre moteur (3) est relié directement à l'arbre mené (2) est appelée automatiquement comme position de commutation de sécurité lors d'un dérangement du différentiel de direction, en particulier en cas de disparition de la tension du moteur.

21. Système de conduite d'un véhicule selon la revendication 20, **caractérisé en ce que** la commande est mécanique.
